(19) Europäisches Patentamt / European Patent Office / Office européen des brevets

(11) **EP 2 783 458 B1**

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(21) Anmeldenummer: **12780468.0**

(22) Anmeldetag: **22.10.2012**

(51) Int Cl.:
*H02M 7/217* *(2006.01)*   *H02M 7/06* *(2006.01)*

(86) Internationale Anmeldenummer:
**PCT/EP2012/070852**

(87) Internationale Veröffentlichungsnummer:
**WO 2013/075896 (30.05.2013 Gazette 2013/22)**

(54) **GESTEUERTER GLEICHRICHTER MIT EINER B2-BRÜCKE UND NUR EINEM SCHALTMITTEL**

CONTROLLED RECTIFIER WITH A B2 BRIDGE AND ONLY ONE SWITCHING DEVICE

REDRESSEUR COMMANDÉ DOTÉ D'UN PONT B2 ET D'UN SEUL DISPOSITIF DE COMMUTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2011 DE 102011119261**

(43) Veröffentlichungstag der Anmeldung:
**01.10.2014 Patentblatt 2014/40**

(73) Patentinhaber: **Paul Vahle GmbH & Co. KG**
**59174 Kamen (DE)**

(72) Erfinder: **TURKI, Faical**
**59192 Bergkamen (DE)**

(74) Vertreter: **Lenzing Gerber Stute**
**PartG von Patentanwälten m.b.B.**
**Bahnstraße 9**
**40212 Düsseldorf (DE)**

(56) Entgegenhaltungen:
**EP-A2- 0 891 039      DE-A1-102008 058 009**
**US-A1- 2005 133 497   US-A1- 2006 227 577**

EP 2 783 458 B1

**Beschreibung**

Die Erfindung betrifft einen sekundärseitigen Gleichrichter eines induktiven Energieübertragungssystems, wobei das Energieübertragungssystem einen einphasigen Resonanzschwingkreis mit mindestens einer Induktivität und mindestens einer Kapazität aufweist, welcher mit einem primärseitigen Resonanzschwingkreis magnetisch koppelbar ist, und dass der sekundärseitige Gleichrichter eine B2-Brückenschaltung aus vier Dioden aufweist, die eingangsseitig mit dem sekundärseitigen Resonanzschwingkreis verbunden ist, und deren Ausgangsspannung mindestens ein Glättungskondensator glättet.

Bei der kontaktlosen Energieübertragung wird im Allgemeinen eine induzierte Spannung im Sekundärkreis eines Luftspalttrafos gleichgerichtet, wobei die resultierende Gleichspannung anschließend für die Versorgung von Verbrauchern genutzt wird. Ein einfacher Gleichrichter besteht dabei aus einer B2-Brücke aus vier Dioden D1-D4 und einem zusätzlichen Glättungskondensator, wie er in Figur 1 dargestellt ist. Der Gleichrichter erzeugt dabei eine Gleichspannung, die in erster Linie von der Kopplung zum Primärkreis und auch von der Last abhängig ist. Wenn eine konstante Gleichspannung erforderlich ist, kann die variable Gleichrichter-Spannung $U_A$ über einen nicht dargestellten DC/DC-Wandler eingeregelt werden. Die im Resonanzschwingkreis induzierte Spannung ist durch die Ersatzspannungsquelle $U_i$ repräsentiert. Die Übertragungsfrequenz des Energieübertragungssystems liegt bei Verwendung von Resonanzschwingkreisen im kHz-Bereich.

Der vorbeschriebene Gleichrichter ist auch zur Gleichrichtung eines induktiven Energieübertragungssystems geeignet, welches einen einphasigen primärseitigen und einen einphasigen sekundärseitigen Resonanzschwingkreis aufweist, welche miteinander magnetisch gekoppelt sind. Die Resonanzschwingkreise können dabei als Parallel- oder Reihenschwingkreise, bestehend aus Induktivitäten und Kapazitäten, ausgebildet sein.

Aus US 2005/0133497 A1 ist ein sekundärseitiger Gleichrichter für ein berührungsloses Energieübertragungssystem bekannt, bei dem der resonante Strom mittels einer B2-Brücke, bestehend aus vier Dioden D1-D4, gleichgerichtet und mittels eines zusätzlichen Glättungskondensators sowie einer Spannungsregelung auf eine Referenzspannung eingeregelt wird. Die Spannungsregelung erfolgt dabei immer dann, wenn aufgrund einer zu niedrigen Last die Ausgangsspannung steigt. Ein Absinken der Ausgangsspannung wird durch das Kurzschließen zweier Dioden der B2-Brücke erreicht, wodurch die Resonanz des Parallelschwingkreises beendet wird. Sobald die Ausgangsspannung unter die Referenzspannung sinkt, wird der Kurzschluss der beiden Dioden der B2 aufgehoben und der sekundärseitige Gleichrichter entnimmt aufgrund der sich wieder einstellenden Resonanz der Primärseite wieder Energie.

Aus DE 10 2008 058 009 A1 ist eine Anordnung zur drahtlosen Energieübertragung bekannt, bei der die Lasteinheit in Reihe zum Empfangsschwingkreis geschaltet ist und ein Schwingkreisstrom erst dann fließt, wenn die in der Empfangsspule des Empfangsschwingkreises induzierte Spannung einen bestimmten Schwellwert übersteigt. Hierzu weist die Anordnung einen Schalter auf, mit dem der Empfangsschwingkreis vom nachgeschalteten Gleichrichter trennbar ist. Die Regelung der Ausgangsspannung erfolgt mittels einer dem Gleichrichter nachgeschalteten Regeleinheit.

Aus EP 0 891 039 A1 ist ein kapazitives Netzteil zur Speisung einer Last aus einem Wechselspannungsnetz bekannt. Das kapazitive Netzteil weist dabei einen Netzteilkondensator und einen Zweiweggleichrichter mit ausgangsseitig parallelgeschalteter erster Zenerdiode und einen Ladekondensator auf. Mit Hilfe eines Schalters lässt sich ein Brückenzweig überbrücken um den Gleichrichter in einen Einwegmodus zu schalten.

Aufgabe der vorliegenden Erfindung ist es, einen gesteuerten sekundärseitigen Gleichrichter zur Verfügung zu stellen, mit dem die Ausgangsspannung einregelbar oder einstellbar ist, und der aus wenigen Bauelementen besteht.

Diese Aufgabe wird erfindungsgemäß mit einem sekundärseitigen Gleichrichter mit den Merkmalen des Anspruchs 1 gelöst. Weitere vorteilhafte Ausgestaltungen des erfindungsgemäßen Gleichrichters ergeben sich durch die Merkmale der Unteransprüche.

Der erfindungsgemäße sekundärseitige Gleichrichter zeichnet sich vorteilhaft dadurch aus, dass lediglich ein gesteuertes Schaltmittel benötigt wird, mit dem zwischen zwei Modi hin und her geschaltet werden kann. Das Schaltmittel ist dabei zu einer der Dioden der B2-Brücke parallel geschaltet. Bei offenem Schaltmittel ist die parallele Diode nicht kurzgeschlossen, so dass der sekundärseitige Gleichrichter wie ein herkömmlicher, ungesteuerter B2-Brückengleichrichter arbeitet. In diesem ersten Modus ist somit eine Vollbrücken-Gleichrichtung gegeben. Diese liefert typischerweise eine einfache Spitzenwertgleichrichtung des AC-Wertes mit

$$U_A = \sqrt{2} \, * \, U_i \text{ im Leerlauf.}$$

Im zweiten Modus ist die Diode mittels des Schaltmittels kurzgeschlossen, wodurch der Gleichrichter zusammen mit der mindestens einen Kapazität des sekundärseitigen Resonanzschwingkreises als Spannungsverdoppler arbeitet. Im zweiten Modus stellt sich nach mehreren Schwingungsperioden des Resonanzschwingkreises der doppelte Spannungswert $U_A = 2 * \sqrt{2} * U_i$ im Leerlauf ein.

Durch die Einschaltdauer des Schaltmittels kann somit die Ausgangsspannung zwischen den Werten $U_{A,min} = \sqrt{2} * U_i$ und $U_{A,max} = 2 * \sqrt{2} * U_i$ eingeregelt oder dauerhaft auf $U_{A,min}$ oder $U_{A,max}$ geschaltet werden.

Es ist dabei vorteilhaft, wenn das Schaltmittel weich geschaltet wird, d.h. beim Schalten des Schaltmittels durch dieses kein Strom fließt und es spannungslos geschaltet wird. Hierdurch ergeben sich vorteilhaft geringe Schaltverluste. Es ist jedoch auch möglich, dass das Schaltmittel hart geschaltet wird.

Der erfindungsgemäße sekundärseitige Gleichrichter ermöglicht somit mit nur einem zusätzlichen Schaltmittel eine Regelung der Ausgangsspannung in einem genügend großen Stellbereich. Das eine Schaltmittel ersetzt somit vorteilhaft einen sonst notwendigen DC/DC-Wandler.

Der erfindungsgemäße Gleichrichter zeichnet sich aufgrund der wenigen benötigten Bauelemente, durch eine kleine Bauweise und ein niedriges Gewicht aus und ist zudem in der Herstellung günstig.

Aufgrund der Möglichkeit den Gleichrichter im Spannungsverdopplermodus zu betreiben, kann die Blindleistung im sekundärseitigen Resonanzkreis vorteilhaft reduziert werden, da die Resonanzkondensatoren lediglich für die Summe der Wirkspannung und halber Blindspannung des herkömmlichen passiven Gleichrichters dimensioniert werden müssen.

Sofern der erfindungsgemäße Gleichrichter in einer Pickup eingesetzt wird, kann diese vorteilhaft kleiner dimensioniert und günstiger gefertigt werden. Die Erfindung beansprucht gleichsam ein Energieübertragungssystem und eine Pickup, bei dem ein erfindungsgemäßer sekundärer Gleichrichter verwendet wird.

Nachfolgend wir anhand von Zeichnungen der erfindungsgemäße Gleichrichter näher erläutert.

Es zeigen:

Fig. 1: Ein durch einen sekundärseitigen Resonanzschwingkreis gespeister ungesteuerter B2U-Brückengleichrichter;

Fig. 2: einen erfindungsgemäßen sekundärseitigen gesteuerten Brückengleichrichter mit einem eine Diode wahlweise kurzschließenden Schaltelement;

Fig. 3: ein Ersatzschaltbild für den zweiten Modus, in dem die Diode mittels des Schaltelementes kurzgeschlossen ist und der Gleichrichter als Spannungsverdoppler arbeitet;

Fig. 4: ein Strom- und Spannungsdiagramm.

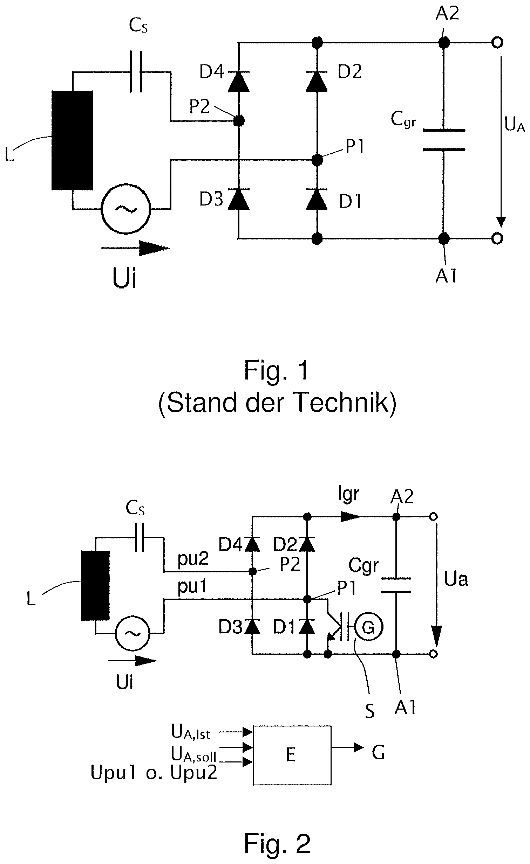

In Figur 2 ist das Schaltbild für den erfindungsgemäßen sekundärseitigen Gleichrichter dargestellt. Der Serienresonanzschwingkreis, welcher durch die Induktivität L der Spule und den Resonanzkondensatoren $C_s$ gebildet ist, ist an den Eingangsklemmen P1 und P2 der Diodenbrücke des Gleichrichters angeschlossen. An den Ausgangsklemmen A1, A2 der Diodenbrücke ist ein Glättungskondensator geschaltet. Im Resonanzschwingkreis ist eine Spannungsquelle $U_i$ dargestellt, die die induzierte Spannung repräsentiert.

Parallel zu einer beliebigen Diode D1 bis D4 ist das Schaltmittel S geschaltet, mit dem sich der Gleichrichter zwischen einem ersten und einem zweiten Modus hin und her schalten lässt. Im ersten Modus, wenn der Halbleiter-Schalter S ausgeschaltet ist, verhält sich der Gleichrichter wie eine B2-Vollbrücke wie sie in Figur 1 dargestellt ist. Es stellt sich dann am Ausgang eine Ausgangsspannung

$$U_{A,min} = \sqrt{2} * U_i$$

ein.

Wird das Schaltmittel S geschlossen, so ist das Potential in Punkt P1 auf Masse bzw. das Potential der Klemme A1 gezogen und der Gleichrichter befindet sich im zweiten Modus und damit im Verdopplungsmodus. Wird das Schaltmittel S lange genug geschlossen bzw. eingeschaltet, stellt sich eine Ausgangsspannung

$$U_{A,max} = 2*\sqrt{2}*U_i$$

ein.

Je nach Einschaltdauer lässt sich somit die Ausgangsspannung $U_A$ auf einen beliebigen Wert zwischen den beiden Grenzwerten $U_{A,min}$ und $U_{A,max}$ einregeln.

Im zweiten Modus fließt durch die Diode D3 die negative Halbwelle der induzierten Spannung, so dass sich der Resonanz-Kondensator $C_s$ auf seinen Spitzenwert auflädt, um hinterher während der positiven Halbwelle über die Diode D4 den Glättungskondensator $C_{gr}$ auf die Summe der induzierten Spannung der positiven Halbwelle und der Resonanz-Kondensatorspannung, die während der negativen Halbwelle gespeichert wurde, aufzuladen, so dass sich nach einigen Schwingungsperioden die Spannung $U_{A,max}$ einstellt.

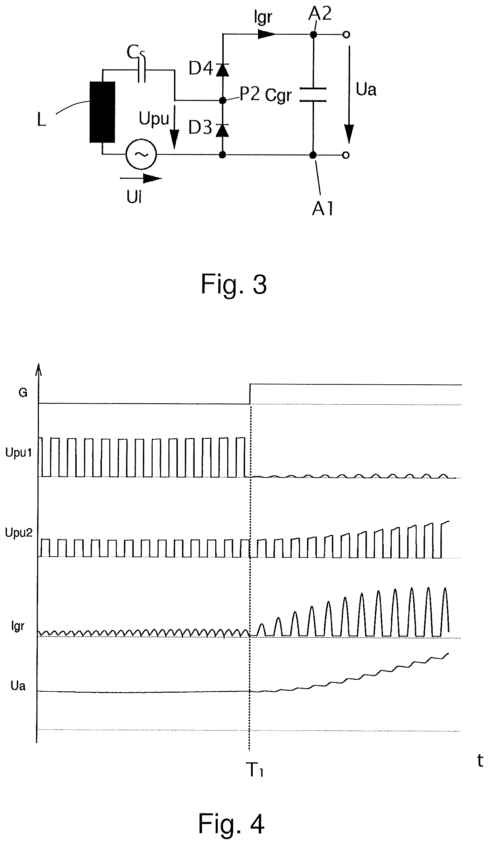

Die Figur 4 zeigt die Spannungen und Ströme des umschaltbaren Gleichrichters. Solange das Ansteuersignal G für das Schaltmittel S Null beträgt, sind beide Pole des Schwingkreises im Gegentakt symmetrisch. Die Schaltung befindet sich im Vollbrücken-Modus. Der Gleichrichterstrom, der in den Glättungskondensator fließt, beinhaltet beide Halbperioden. Solange die Antiparalleldiode zum Schalter S Strom leitet, kann der Halbleiter-Schalter S spannungslos eingeschaltet werden. Damit werden Schaltverluste vermieden.

Zum Zeitpunkt T1 wird das Ansteuersignal G für das Schaltmittel S auf EINS gesetzt, wodurch die Diode D1 durch das Schaltmittel S kurzgeschlossen wird. Der Gleichrichter arbeitet ab dem Zeitpunkt $T_1$ zusammen mit den Kondensatoren $C_s$ des Resonanzschwingkreises als Spannungsverdoppler. Das Potential des Punktes P1 und damit ein Potential des Schwingkreises wird hierdurch - wie dargestellt - auf Masse bzw. auf ein festes Potential gebunden, sofern eine obere Diode mittels des Schaltmittels S kurzgeschlossen wird. Der Gleichrichter Strom $I_{gr}$ fließt nur in der positiven Halbperiode. Da die Ausgangsspannung $U_A$ am Glättungskondensator $C_{gr}$ nicht schlagartig verdoppelt werden kann, steigt der Spitzenstrom und es wird im Mittelwert mehr Leistung an den Ausgangskreis geleitet. Die Ausgangsspannung $U_A$ steigt mit der Zeitkonstante, die sich aus der Güte des gesamten passiven Kreises ergibt. Das Ansteuerungssignal G besitzt in der Regel eine Frequenz, die kleiner ist als die Übertragungsfrequenz des Energieübertragungssystems. Wie bereits erläutert, kann über die Einschalt-/Ausschaltdauer des Halbleiterschalters S die Größe der Ausgangsspannung $U_A$ oder der Ausgangsstrom des Gleichrichters geregelt werden.

**Patentansprüche**

1. Sekundärseitiger Gleichrichter eines induktiven Energieübertragungssystems, wobei der sekundärseitige Gleichrichter einen einphasigen Resonanzschwingkreis mit mindestens einer Induktivität (L) und mindestens einer Kapazität ($C_s$) aufweist, welcher mit einem primärseitigen Resonanzschwingkreis magnetisch koppelbar ist, und dass der sekundärseitige Gleichrichter eine B2-Brückenschaltung aus vier Dioden (D1, D2, D3, D4) aufweist, die eingangsseitig mit dem sekundärseitigen Resonanzschwingkreis verbunden ist, und deren Ausgangsspannung mindestens ein Glättungskondensator ($C_{gr}$) glättet, **dadurch gekennzeichnet, dass** parallel zu einer Diode (D1, D2, D3, D4) ein Schaltmittel (S) geschaltet ist, mittels dem die Diode (D1, D2, D3, D4) kurzschließbar ist, wobei in einem ersten Modus, bei dem das Schaltmittel (S) ausgeschaltet und somit die zugehörige Diode (D1) nicht kurzgeschlossen ist, der sekundärseitige Gleichrichter ein normaler Gleichrichter ist, und dass in einem zweiten Modus, bei dem das Schaltmittel (S) eingeschaltet und somit die zugehörige Diode (D1) kurzgeschlossen ist, der sekundärseitige Gleichrichter zusammen mit der Kapazität ($C_s$) des sekundärseitigen Resonanzschwingkreises einen Spannungsverdoppler bildet.

2. Sekundärseitiger Gleichrichter nach Anspruch 1, **dadurch gekennzeichnet, dass** eine Steuereinrichtung (E) das Schaltmittel (S) schaltet.

3. Sekundärseitiger Gleichrichter nach Anspruch 2, **dadurch gekennzeichnet, dass** die Steuereinrichtung (E) das Schaltmittel (S) zum Einregeln einer Soll-Ausgangsspannung ($U_{A,soll}$) oder eines Soll-Ausgangsstroms ansteuert und hierzu die gemessene Ist-Ausgangsspannung ($U_{A,Ist}$) bzw. den Ist-Ausgangsstrom des Gleichrichters mit der Soll-Ausgangsspannung ($U_{A,soll}$) bzw. dem Soll-Ausgangsstrom vergleicht.

4. Sekundärseitiger Gleichrichter nach Anspruch 2 oder 3, **dadurch gekennzeichnet, dass** die Steuereinrichtung (E) das Schaltmittel (S) zur Erhöhung der Ausgangsspannung ($U_A$) einschaltet, womit die zugehörige Diode (D1) kurzgeschlossen ist.

5. Sekundärseitiger Gleichrichter nach Anspruch 1, **dadurch gekennzeichnet, dass** der Gleichrichter durch Umschalten zwischen den beiden Modi eine Soll-Ausgangsspannung ($U_{A,soll}$) einregelt.

6. Sekundärseitiger Gleichrichter nach einem der vorhergehenden Ansprüche, **dadurch gekennzeichnet, dass** das Schaltmittel (S) über mehr als eine Schwingungsperiode des sekundärseitigen Resonanzschwingkreises geöffnet oder geschlossen ist.

7. Sekundärseitiger Gleichrichter nach einem der vorhergehenden Ansprüche 2 bis 7, **dadurch gekennzeichnet, dass** die Steuereinrichtung (E) das Schaltmittel (S) in Abhängigkeit der Spannung ($U_{pu1}$, $U_{pu2}$) bzw. des Potentials an einer der Eingangsklemmen (P1, P2) der B2-Brückenschaltung und/oder in Abhängigkeit des durch das Schaltmittel (S) fließenden Stroms schaltet.

8. Sekundärseitiger Gleichrichter nach einem Anspruch 7, **dadurch gekennzeichnet, dass** die Steuereinrichtung (E) das Schaltmittel (S) zur Minimierung der Schaltverluste immer nur dann öffnet, wenn der Strom durch das Schaltmittel (S) Null oder nahezu Null ist.

9. Sekundärseitiger Gleichrichter nach einem der vorhergehenden Ansprüche, **dadurch gekennzeichnet , dass** die Steuereinrichtung (E) das nicht geschaltete Potential ($U_{pu2}$) im Punkt (P2) ermittelt und das Ansteuersignal (G) mit dem Verlauf des Potentials ($U_{pu2}$) synchronisiert.

10. Sekundärseitiger Gleichrichter nach einem Anspruch 9, **dadurch gekennzeichnet , dass** die Steuereinrichtung (E) nur dann das Schaltmittel (S) schaltet, wenn das Potential ($U_{pu2}$) einen Wert von größer als $U_{A,ist}/2$ aufweist.

11. Energieübertragungssystem unter Verwendung eines sekundärseitigen Gleichrichters nach einem der vorhergehenden Ansprüche.

12. Pickup für ein einphasiges Energieübertragungssystem mit einem sekundärseitigen Gleichrichter nach einem der Ansprüche 1 bis 10.

**Claims**

1. Secondary side rectifier of an inductive energy transmission system, wherein the secondary side rectifier has a single-phase resonant circuit, which has at least one inductivity (L) and at least one capacity ($C_s$) which can be magnetically coupled to a primary side resonant circuit, and in that the secondary side rectifier has a B2 bridge circuit, comprising four diodes (D1, D2, D3, D4) which is connected with its input side to the secondary side resonant circuit; and whose outlet voltage is smoothened by at least one smoothing capacitor ($C_{gr}$), **characterised in that** a switching means (S) is connected in parallel with a diode (D1, D2, D3, D4) by means of which the diode (D1, D2, D3, D4) can be short-circuited, wherein in a first mode, in which the switching means (S) is switched off and the associated diode (D1) is therefore not short-circuited, the secondary side rectifier is a normal rectifier, and **in that** in a second mode, in which the switching means (S) is switched on and the associated diode (D1) is therefore short-circuited, the secondary side rectifier together with the at least one capacity ($C_s$) of the secondary side resonant circuit forms a voltage doubler.

2. Secondary side rectifier according to claim 1, **characterised in that** a control device (E) switches the switching means (S).

3. Secondary side rectifier according to claim 2, **characterised in that** the control device (E) actuates the switching means (S) to regulate to a setpoint output voltage ($U_{A,setpoint}$) or a setpoint output current, and to this end compares the measured actual output voltage ($U_{A,actual}$) or actual output current of the rectifier with the setpoint output voltage ($U_{A,setpoint}$) or the setpoint output current.

4. Secondary side rectifier according to claim 2 or 3, **characterised in that** the control device (E) switches on the switching means (S) to increase the output voltage ($U_A$), whereby the associated diode (D1) is short-circuited.

5. Secondary side rectifier according to claim 1, **characterised in that** the rectifier regulates a setpoint output voltage ($U_{A,setpoint}$) by switching between the two modes.

6. Secondary side rectifier according to any one of the preceding claims, **characterised in that** the switching means (S) is opened or closed for more than one wave period of the secondary side resonant circuit.

7. Secondary side rectifier according to any one of the preceding claims 2 to 7, **characterised in that** the control device (E) switches the switching means (S) as a function of the voltage ($U_{pu1}$, $U_{pu2}$) or the potential at one of the input terminals (P1, P2) of the B2 bridge circuit and/or as a function of the current flowing through the switching means (S).

8. Secondary side rectifier according to claim 7, **characterised in that** the control device (E) opens the switching means (S) to minimise the switching losses only when the current through the switching means (S) is zero or virtually zero.

9. Secondary side rectifier according to any one of the preceding claims, **characterised in that** the control device (E) determines the unswitched potential ($U_{pu2}$) in point (P2) and the actuation signal (G) synchronises with the profile of the potential ($U_{pu2}$).

10. Secondary side rectifier according to claim 9, **characterised in that** the control device (E) switches the switching means (S) only when the potential ($U_{pu2}$) has a value greater than $U_{A,actual}/2$.

11. Energy transmission system using a secondary side rectifier according to any one of the preceding claims.

12. Pickup for a single-phase energy transmission system, with a secondary side rectifier according to any one of claims 1 to 10.

**Revendications**

1. Redresseur situé côté secondaire d'un système de transmission d'énergie inductif, ledit redresseur situé côté secondaire comportant un circuit résonant monophasé qui présente au moins une inductance (L) et au moins une capacité ($C_s$) et pouvant être couplé magnétiquement à un circuit résonant côté primaire et ledit redresseur situé côté secondaire présente un montage en pont B2 composé de quatre diodes (D1, D2, D3, D4), qui est relié, côté entrée, au circuit résonant situé côté secondaire et dont la tension de sortie uniformise au moins un condensateur d'uniformisation ($C_{gr}$), **caractérisé en ce qu'**un dispositif de commutation (S) est couplé parallèle à une diode (D1, D2, D3, D4) et sert à court-circuiter ladite diode (D1, D2, D3, D4), où avec un premier mode, lors duquel le dispositif de commutation (S) est éteint et ainsi la diode (D1) correspondante n'est pas court-circuitée, le redresseur situé côté secondaire est un redresseur usuel, et **en ce que**, dans un deuxième mode, lors duquel le dispositif de commutation (S) est allumé et ainsi la diode (D1) correspondante est court-circuitée, le redresseur situé côté secondaire forme avec la capacité ($C_s$) du circuit résonant situé côté secondaire un doubleur de tension.

2. Redresseur situé côté secondaire selon la revendication 1, **caractérisé en ce qu'**un dispositif de commande (E) actionne le dispositif de commutation (S).

3. Redresseur situé côté secondaire selon la revendication 2, **caractérisé en ce que** le dispositif de commande (E) commande le dispositif de commutation (S) pour le réglage d'une tension de sortie de consigne ($U_{A,soll}$) ou d'un courant de sortie de consigne et compare, dans ce but, la tension de sortie réelle mesurée ($U_{A,ist}$) ou le courant de sortie réel du redresseur à la tension de sortie de consigne ($U_{A,soll}$) ou au courant de sortie de consigne.

4. Redresseur situé côté secondaire selon la revendication 2 ou 3, **caractérisé en ce que** le dispositif de commande (E) allume le dispositif de commutation (S) pour un accroissement de la tension de sortie ($U_A$), moyennant quoi la diode (D1) correspondante est court-circuitée.

5. Redresseur situé côté secondaire selon la revendication 1, **caractérisé en ce que** le redresseur règle, par commutation entre les deux modes, une tension de sortie de consigne ($U_{A,soll}$).

6. Redresseur situé côté secondaire selon l'une des revendications précédentes, **caractérisé en ce que** le dispositif de commutation (S) est ouvert ou fermé durant plus d'une période d'oscillation du circuit résonant situé côté secondaire.

7. Redresseur situé côté secondaire selon l'une des revendications précédentes 2 à 7, **caractérisé en ce que** le dispositif de commande (E) actionne le dispositif de commutation (S) en fonction de la tension ($U_{pu1}$, $U_{pu2}$) ou du potentiel au niveau d'une borne d'entrée (P1, P2) du montage en pont B2 et/ou en fonction du courant circulant à travers le dispositif de commutation (S).

8. Redresseur situé côté secondaire selon la revendication 7, **caractérisé en ce que** dispositif de commande (E) n'ouvre le dispositif de commutation (S) pour minimiser les pertes de commutation que lorsque le courant à travers le dispositif de commutation (S) est égal ou proche de zéro.

9. Redresseur situé côté secondaire selon l'une des revendications précédentes, **caractérisé en ce que** le dispositif de commande (E) détermine le potentiel non commuté (Upu2) au niveau du point (P2) et synchronise le signal de commande (G) avec le tracé du potentiel (Upu2).

10. Redresseur situé côté secondaire selon la revendication 9, **caractérisé en ce que** le dispositif de commande (E) n'actionne le dispositif de commutation (S) que lorsque le potentiel (Upu2) affiche une valeur supérieure à $U_{A,ist}/2$.

11. Système de transmission d'énergie faisant appel à un redresseur situé côté secondaire selon l'une des revendications précédentes.

12. Pick-up pour un système de transmission d'énergie monophasé avec un redresseur situé côté secondaire selon l'une des revendications 1 à 10.

Fig. 1
(Stand der Technik)

Fig. 2

## Fig. 3

## Fig. 4

**IN DER BESCHREIBUNG AUFGEFÜHRTE DOKUMENTE**

**In der Beschreibung aufgeführte Patentdokumente**

- US 20050133497 A1
- DE 102008058009 A1

- EP 0891039 A1